# EUROPEAN PATENT APPLICATION

(11) **EP 3 112 837 A1**
(43) Date of publication of application: **04.01.2017**
(21) Application number: 15755694.5
(22) Date of filing: 27.02.2015
(51) Int. Cl.: G01M 11/00, G02C 13/00

(54) **LENS INSPECTION APPARATUS AND METHOD FOR PRODUCING EYEGLASS LENS**

(30) Priority: 28.02.2014 JP 2014039191
(71) Applicant: Hoya Lens Thailand Ltd., Patumthani (TH)
(72) Inventor: DAIMARU Takashi, Tokyo 161-8525 (JP)
(74) Representative: Betten & Resch
(86) International application number: PCT/JP2015/055777
(87) International publication number: WO 2015/129848

(57) **Abstract**

A lens inspection device used for layout inspection of an edged lens edged in accordance with a shape of a spectacle frame, and having a layout inspection mark affixed to a lens surface, the lens inspection device includes a support unit 16 that supports the edged lens, an imaging unit 17 that takes in an imaged image including a visible outline of the edged lens and the layout inspection lark by imaging the edged lens supported by the support unit 16, a monitor that displays the imaged image taken in in the imaging unit 17, and a display control unit 19 that displays, on the monitor 18, a lens outline reference line indicating a position to which the visible outline of the edged lens included in the imaged image is positioned, and a layout reference mark indicating a position where the layout inspection mark is arranged, together with the imaged image.

## Description

### Technical Field

The present invention relates to a lens inspection device and a method of manufacturing a spectacle lens used for layout inspection of a spectacle lens (hereinafter, also referred to as "edged lens") edged in accordance with the shape of a spectacle frame.

### Background Art

An uncut spectacle lens (hereinafter, also referred to as "uncut lens") having lens surfaces (a convex surface and a concave surface) finished to be final optical surfaces is edged in accordance with the shape of a spectacle frame, and is then fit into the spectacle frame. A pair of spectacles that is a finished product (final product) by the fitting of the lens into the frame is inspected regarding inspection items determined in advance, and the pair of spectacles determined to be a quality product is then provided to a spectacle purchaser.

Among the inspection items of the spectacle finished product, there is an item related to a layout of the spectacle lens to the spectacle frame. To be specific, for example, there is an item that inspects whether a fitting point of the spectacle lens and a pupil center (hereinafter, referred to as "eye point") accord with each other when a spectacle wearer wears the finished pair of spectacles (the spectacle frame with the lenses). If the fitting point of the spectacle lens and the pupil center are deviated from each other, functions such as eye correction, which the spectacle lens has, cannot be maximized. Therefore, the deviation may affect the spectacle wearer, such as poor vision or fatigue. Therefore, conventionally, inspection of the spectacle finishedproduct is performed using an inspection chart paper (for example, see Patent Literature 1).

### Citation List

### Patent Literature

Patent Literature 1: JP 6-242408 A

### Summary of Invention

### Technical Problem

By the way, one of spectacle lens supply systems is called communication edging system. The communication edging system is a system that transmits order data necessary for edging of the spectacle lens from an order side to a manufacturing side through a communication network, and supplies (delivers) the spectacle lens, which has been edged at the manufacturing side using the order data, from the manufacturing side to the order side.

In the communication edging system, information related to the spectacle frame in hand of the order side is included in the order data transmitted from the order side to the manufacturing side, so that delivery of the spectacle frame between the order side and the manufacturing side becomes unnecessary. Therefore, the manufacturing side needs to perform inspection as to whether the edged lens is edged in a layout suitable for fitting to the spectacle frame (hereinafter, the inspection is referred to as "layout inspection") in a situation where the spectacle frame is not in hand.

A method of using the inspection chart paper can be considered for the layout inspection of the edged lens at the manufacturing side. In that case, lines and marks necessary for the layout inspection are printed on the inspection chart paper. To be specific, in a case of an eye point position for a frame center, or a progressive lens, lines and marks that indicate an alignment reference mark position, a distance measuring point, a near measuring point, and the like are printed. Then, in an actual lens inspection process, the layout inspection is performed in a procedure as follows, for example.

First, an inspector places the edged lens on the inspection chart paper. At this time, the inspector places the edged lens with a convex surface facing upward so as not to damage the lens surface of the edged lens.

Next, the inspector visually positions a visible outline of the edged lens to a reference line of the inspection chart paper.

Next, the inspector inspects the inspection items determined in advance while maintaining the positioned state. For example, in a case where the inspection item is the fitting point, the inspector inspects deviation of the fitting point. A mark point is affixed to a position of the fitting point on the convex surface of the edged lens that is a product to be inspected. Meanwhile, a mark is affixed to a position of the eye point on the inspection chart paper. In a state where the edged lens is actually fit into the spectacle frame, the fitting point needs to accord with the eye point. Therefore, the inspector confirms positional deviation of the fitting point to the eye point by comparing the position of the mark point of the edged lens and the position of the mark on the inspection chart paper. If a positional deviation amount of the fitting point falls within an allowable range determined in advance, the inspector determines the product to be inspected as a quality product. If the positional deviation amount falls outside the allowable range, the inspector determines the product to be inspected as a defective product.

Note that the inspection items include, in addition to the fitting, a monocular pupillary distance and a cylinder axis.

However, in the layout inspection using the inspection chart paper, even if a viewpoint (the position of an eye) of the inspector to see the mark point and the mark is slightly deviated, how the mark point and the mark are seen is changed. Therefore, for example, there may be a case where a certain inspector determines that the edged lens is the quality product on the one hand and another inspector determines that the edged lens is the defective product on the other hand. In that case, which is correct cannot be objectively determined.

For reasons to split the determinationof quality depending on the inspectors, reasons as follows can be considered, in addition to the deviation of the viewpoint described above.

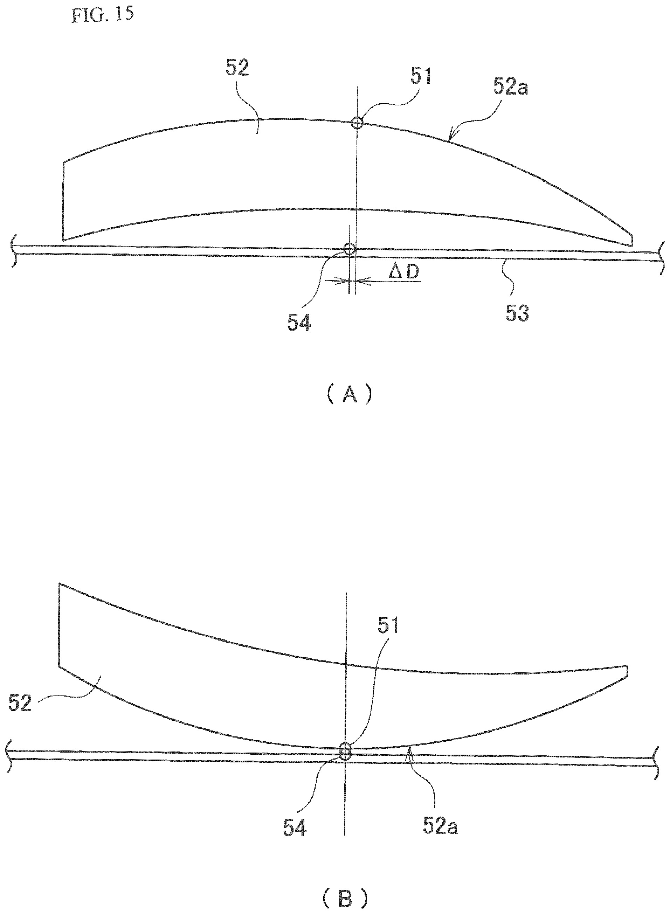

The first reason is that, as illustrated in Fig. 15(A), a mark point 51 and a mark 54 are arranged separated from each other in a thickness direction of an inspection chart paper 53, when an edged lens 52 with a convex surface 52a facing upward, to which the mark point 51 is affixed, is placed on the inspection chart paper 53. If the mark point 51 and the mark 54 are separated from each other, the mark point 51 may be seen overlapping with the mark 54, or the mark point 51 may be seen deviated from the mark 54, depending on a position where these point and mark are viewed or a difference in an angle. Therefore, even if the same positional deviation ΔD occurs, determination of the quality may be different depending on the inspector.

Further, when the edged lens 52 with the convex surface 52a facing upward is placed on the inspection chart paper 53, the separate distance between the mark point 51 and the mark 54 is determined according to a curve or a thickness of the edged lens 52. Therefore, as illustrated in Fig. 15 (B), to bring the mark point 51 and the mark 54 to get close to each other, the edged lens 52 with the convex surface 52a facing downward needs to be placed on the inspection chart paper 53. However, in that case, the convex surface 52a of the lens comes in contact with the inspection chart paper 53, and thus the convex surface 52a of the edged lens 52 may be damaged. Therefore, in the case of using the inspection chart paper 53, the inspection needs to be performed in the state where the convex surface 52a of the lens faces upward, that is, in the state where the mark point 51 and the mark 54 are separated from each other, so as not to damage the lens surface. Therefore, deviation of a gaze of when the inspector actually performs the inspection may affect the inspection result.

The second reason is that the posture of the lens is not necessarily stabilized when the edged lens 52 is placed on the inspection chart paper 53. The outline of the edged lens 52 differs depending on the shape of the spectacle frame to which the edged lens 52 is fit. Therefore, the posture of the lens during inspection is not stabilized and accurate inspection may not be able to be performed, depending on the outline of the edged lens 52. Further, when the edged lens 52 with the convex surface 52a facing upward is placed on the inspection chart paper 53, only a part of a lens outer periphery comes in contact with the inspection chart paper 53 , and other portions are in a floating state. Therefore, the visible outline of the edged lens 52 is not accurately positioned to the reference line of the inspection chart paper 53 , and this deviation affects the inspection result.

A principal object of the present invention is to provide a technology that enables more accurate layout inspection than a case of using an inspection chart paper, when the layout inspection is performed for an edged lens before being fit into a spectacle frame.

### Solution to Problem

According to a first aspect of the present invention, there is provided a lens inspection device used for layout inspection of an edged lens edged in accordance with a shape of a spectacle frame and having a layout inspection mark affixed on at least one of lens surfaces, the lens inspection device comprising:
a support unit configured to support the edged lens;
imaging means configured to take in an imaged image including a visible outline of the edged lens and the layout inspect ion mark by imaging the edged lens supported by the support unit;
a monitor configured to display the imaged image taken in in the imaging means; and
display control means configured to perform control to display, on the monitor, a lens outline reference line indicating a position to which the visible outline of the edged lens included in the imaged image is positioned, and a layout reference mark indicating a position where the layout inspection mark is arranged, together with the imaged image.

According to a second aspect of the present invention, there is provided the lens inspection device according to the first aspect, wherein
the display control means displays the lens outline reference line by double lines that define a positioning allowable width of the visible outline of the edged lens.

According to a third aspect of the present invention, there is provided the lens inspection device according to the first or the second aspect, wherein
the display control means displays a determination reference line indicating an allowable range of positional deviation of the layout inspection mark with respect to the layout reference mark on or near a display position of the layout reference mark.

According to a fourth aspect of the present invention, there is provided the lens inspection device according to any one of the first to third aspects, wherein
the display control means displays a scale for visually confirmingapositional deviation amount of the layout inspection mark with respect to the layout reference mark on or near a display position of the layout reference mark.

According to a fifth aspect of the present invention, there is provided the lens inspection device according to any one of the first to fourth aspects, comprising:
storage means configured to store image data displayed on the monitor when position adjustment of the edged lens is performed using the lens outline reference line and the layout reference mark, in association with identification information of the edged lens.

According to a sixth aspect of the present invention, there is provided a method of manufacturing a spectacle lens including a lens inspection process for performing layout inspection of an edged lens edged in accordance with a shape of a spectacle frame, and having a layout inspection mark affixed to at least one of lens surfaces,
the lens inspection process comprising the processes of:
supporting the edged lens by the support unit;
imaging the edged lens supported by the support unit, and performing position adjustment of the edged lens while displaying, on a monitor, a lens outline reference line indicating a position to which a visible outline of the edged lens included in an imaged image obtained by the imaging is positioned, and a layout reference mark indicating a position where the layout inspection mark is arranged, together with the imaged image; and
determining quality of the layout inspection of the edged lens based on a result of the position adjustment of the edged lens.

According to a seventh aspect of the present invention, there is provided the method of manufacturing a spectacle lens according to the sixth aspect, wherein
an inspection item of the layout inspection is positional deviation of a fitting point.

According to an eighth aspect of the present invention, there is provided the method of manufacturing a spectacle lens according to the sixth aspect, wherein
an inspection item of the layout inspection is axial deviation of the edged lens.

### Advantageous Effects of Invention

According to the present invention, layout inspection can be more accurately performed than a case of using an inspection chart paper, when the layout inspection is performed for an edged lens before being fit into a spectacle frame.

### Brief Description of Drawings

Fig. 1 is a schematic diagram illustrating a configuration of a communication edging system.
Fig. 2 is a schematic configuration diagram of a lens inspection device according to an embodiment of the present invention.
Fig. 3 is a diagram for describing a mechanical configuration of a lens inspection device according to an embodiment of the present invention (Part 1).
Fig. 4 is a diagram for describing a mechanical configuration of a lens inspection device according to an embodiment of the present invention (Part 2).
Figs. 5(A) and 5(B) are diagrams illustrating a configuration of uncut/edged spectacle lenses.
Fig. 6 is a process diagram for describing a method of manufacturing a spectacle lens according to an embodiment of the present invention.
Fig. 7 is a diagram illustrating a display screen of a monitor (Part 1).
Fig. 8 is a diagram illustrating a display screen of a monitor (Part 2).
Fig. 9 is a diagram illustrating a display screen of a monitor (Part 3).
Fig. 10 is a diagram illustrating a display screen of a monitor (Part 4).
Figs. 11 (A) and 11 (B) are diagrams illustrating a display screen of a monitor (Part 5).
Fig. 12 is a diagram for describing a method of inspecting axial deviation as an inspection item of layout inspection.
Fig. 13 is a diagram for describing a specific example of a case where a progressive-power lens is an object to be inspected of layout inspection.

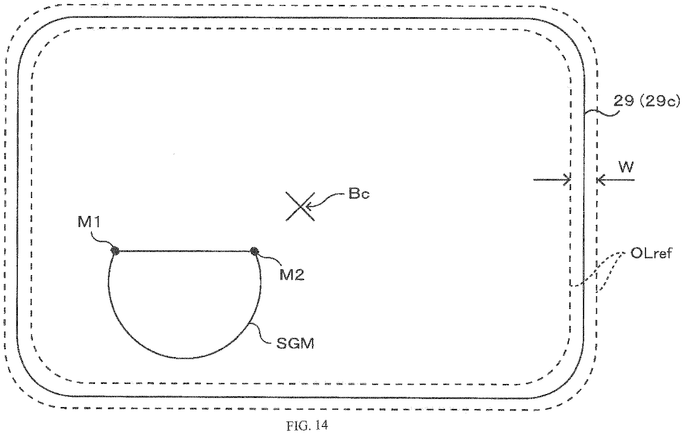

Fig. 14 is a diagram for describing a specific example of a case where a bifocal lens is an object to be inspected of layout inspection.
Figs. 15(A) and 15(B) are diagrams for describing the problem, and Fig. 15(A) illustrates a case where an edged lens with a convex surface facing upward is placed on an inspection chart paper and Fig. 15 (B) illustrates a case where the edged lens with the convex surface facing downward is placed on the inspection chart paper.

### Description of Embodiments

Hereinafter, embodiments of the present invention will be described in detail with reference to the drawings. The embodiments of the present invention will be described in the following order.
1. Configuration of Communication Edging System
2. Schematic Configuration of Lens Inspection Device
3. Mechanical Configuration of Lens Inspection Device
4. Configuration of Spectacle Lens
5. Method of Manufacturing Spectacle Lens
6. Effects according to Embodiments
7. Modifications and the like

### <1. Configuration of Communication Edging System>

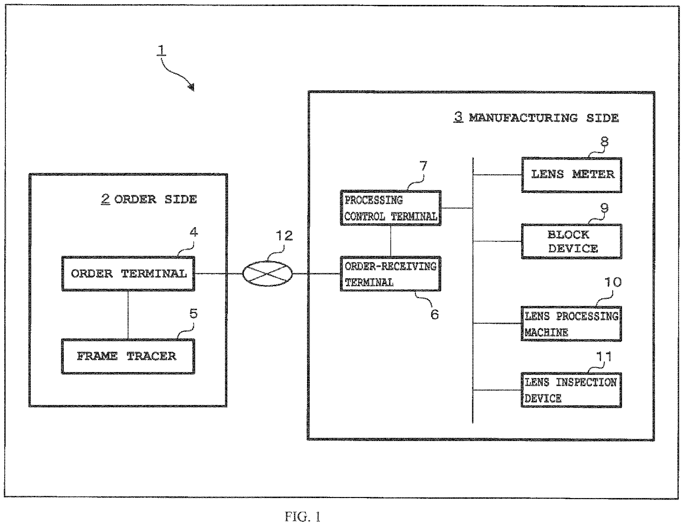

Fig. 1 is a schematic diagram illustrating a configuration of a communication edging system.

A communication edging system 1 illustrated in Fig. 1 is an example of a spectacle lens supply system to which the present invention is applicable, and is divided into an order side 2 and a manufacturing side 3. An example corresponding to the order side 2 includes a spectacle store. An example corresponding to the manufacturing side 3 includes a processing center of a lens manufacturer.

At the order side 2, an order terminal 4 and a frame tracer 5 are installed. At the manufacturing side 3, an order-receiving terminal 6, a processing control terminal 7, a lens meter 8, a block device 9, an edging machine 10, and a lens inspection device 11. The order terminal 4 and the order-receiving terminal 6 are communicatively connected to each other through a communication network 12 such as the Internet.

The order side 2 generates frame shape data by measuring, with the frame tracer 5, a shape (a shape of a portion into which a spectacle lens is fit) of a spectacle frame selected by a wearer (purchaser) of a pair of spectacles. The frame tracer 5 three-dimensionally measures the shape of the spectacle frame. The order terminal 4 takes in the frame shape data generated by the frame tracer 5, and transmits the frame shape data to the manufacturing side 3 as order data together with other data (prescription information, spectacle lens information, layout information, spectacle frame information, and the like).

At the manufacturing side 3, the order data sent from the order side 2 through the communication network 12 is received by the order-receiving terminal 6. The received order data is taken into the processing control terminal 7, as needed. The processing control terminal 7 calculates processing shape data to be used for edging in accordance with the frame shape data included in the order data, the prescription information, the spectacle lens information, and the like, and supplies the processing shape data to the edging machine 10. The lens meter 8 measures an optical center, a cylinder axis, and the like of the spectacle lens (uncut lens), and affixes a mark point to the spectacle lens based on the measurement result. The mark point of the spectacle lens is erasable by being rubbed off.

The block device 9 identifies a holder mounting center position based on the mark point affixed by the lens meter 8, and mounts a lens holder to the spectacle lens in accordance with the holder mounting center position. The edging machine 10 edges the spectacle lens (uncut lens) according to the processing shape data received from the processing control terminal 7. At that time, the spectacle lens is set to the edging machine 10 using the lens holder. After edging, an edged lens is inspected using the lens inspection device 11. Then, the edged lens that has passed layout inspection and other lens inspection (appearance inspection, peripheral length inspection, and the like) by the lens inspection device 11 is supplied from the manufacturing side 3 to the order side 2.

### <2. Schematic Configuration of Lens Inspection Device>

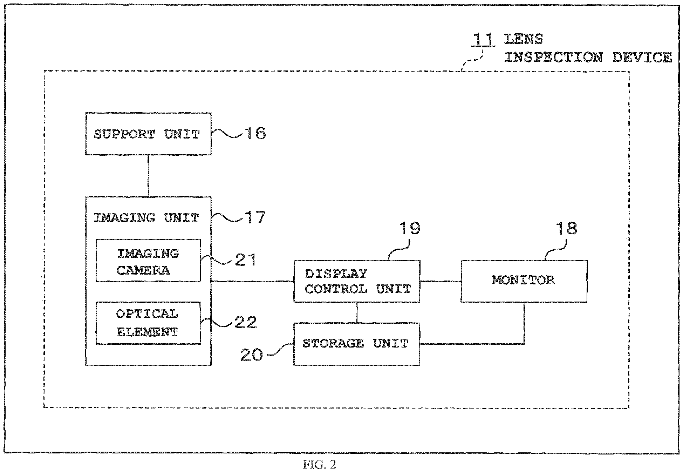

Fig. 2 is a schematic configuration diagram of a lens inspection device according to an embodiment of the present invention.

The illustrated lens inspection device 11 performs the layout inspection of the spectacle lens (edged lens) edged in the edging machine 10. As an inspection device of the edged lens, a peripheral length inspection device that inspects (measures) a peripheral length of the lens is known for example. However, a device that performs the layout inspection of the edged lens alone is not known. Further, the layout inspection can be conducted by simple inspection using an inspection chart paper or the like. However, the inspection is not necessarily sufficient in terms of accuracy of the inspection and appropriateness of objective determination. Therefore, in the present embodiment, a lens inspection device used for the layout inspection is provided. Hereinafter, description will be given.

The lens inspection device 11 broadly includes a support unit 16 that supports the edged lens, an imaging unit 17 that images the edged lens, a monitor 18 that displays an image, a display control unit 19 that displays a predetermined image on the monitor 18, and a storage unit 20.

The support unit 16 supports the edged lens in a position adjustable manner. To be specific, the support unit 16 supports a convex surface of the edged lens at three points from below. In the supporting state, the edged lens is placed on the support unit 16 by its own weight. Therefore, an operator (inspector) who performs the inspection can adjust (coarsely adjust and finely adjust) the position of the lens by lightly touching the edged lens. Further, the support unit 16 can support the convex surface of the edged lens in an approximately horizontal manner by the three-point support.

The imaging unit 17 takes in an imaged image including a visible outline and a layout inspection mark of the edged lens by imaging the edged lens supported by the support unit 16. The imaging unit 17 is configured from an imaging camera 21 and an optical element 22. The imaging camera 21 is configured from, for example, a charge coupled device (CCD) camera or a complementary metal oxide semiconductor (CMOS) camera. The optical element 22 is configured from, for example, a lens, a mirror, and a diaphragm. As a light source for imaging, a dedicated light source may be equipped in the lens inspection device 1, or illumination (fluorescent light or the like) installed on a ceiling of a manufacturing site may be used as a substitute.

The monitor 18 displays various images. The monitor 18 can be configured from, for example, a liquid crystal display monitor and the like. Image data displayed on the monitor 18 is input from the display control unit 19. Note that an image imaged by the imaging unit 17 can be directly input from the imaging unit 17 to the monitor 18 without being relayed in the display control unit 19.

The display control unit 19 controls a lens outline reference line and a layout reference mark to be displayed on the monitor 18 together with the imaged image, the lens outline reference line indicating a position to which the visible outline of the edged lens included in the image imaged by the imaging unit 17 is positioned, and the layout reference mark indicating a position in which the layout inspection mark is arranged. What image is specifically displayed on the monitor 18 by the display control unit 19 will be described in detail below.

The storage unit 20 stores image data displayed on the monitor 18 when the visible outline of the edged lens is positioned to the lens outline reference line, in association with identification information of the edged lens. As the identification information of the edged lens, for example, job identification information generated by the processing control terminal 7 when edging of the spectacle lens is performed using the order data received by the order-receiving terminal 6 can be used. The storage unit 20 canbe configured from, for example, a storage medium such as a non-volatile memory or a hard disk drive, and means to write and read data to/from the storage medium.

### <3. Mechanical Configuration of Lens Inspection Device>

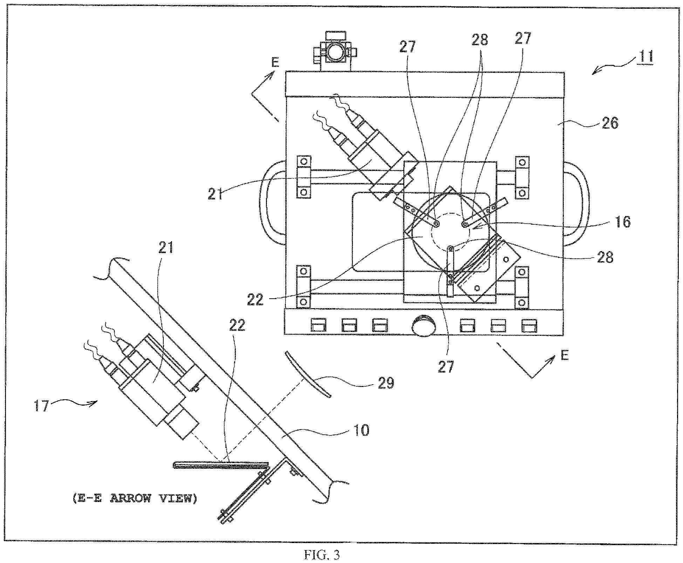

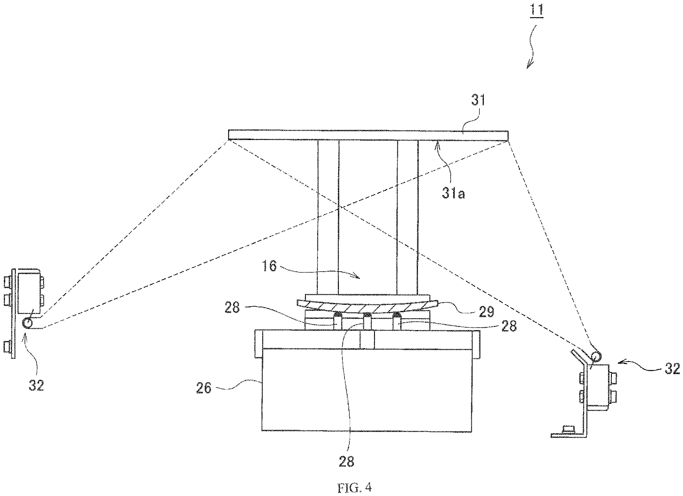

Figs. 3 and 4 are diagrams for describing a mechanical configuration of a lens inspection device according to an embodiment of present invention. Fig. 3 illustrates a plan view (including an E-E arrow view) of a lens inspection device, and Fig. 4 illustrates a side view of the lens inspection device.

The illustrated lens inspection device 11 is configured from a frame 26 as a base. In the lens inspection device 11, the support unit 16 is configured from three support arms 27 provided on an upper surface portion of the frame 26. Support pins 28 are provided on one ends of the respective support arms 27. The support pins 28 are arranged to protrude from the upper surface portion of the frame 26 in a vertically standing state. These support pins 28 support a convex surface 29a of the edged lens 29 at three points. The support pins 28 are arranged to be positioned at vertexes of a triangle in plan view. Further, upper ends of the support pins 28 are arranged at the same height in a vertical direction, and portions being in contact with the edged lens 29 are formed with a round in a hemisphere manner. For convenience, the edged lens 29 is illustrated as a circle in Fig. 3. However, in reality, a lens edged in accordance with the frame shape is supplied to the support unit 16.

Meanwhile, a reflecting plate 31 is provided above the support unit 16. In the reflecting plate 31, a surface (lower surface facing the support unit 16 is a reflecting surface 31a of light. The reflecting surface 31a reflects illumination light emitted from a pair of illumination devices 32 toward the edged lens 29. The dotted lines in Fig. 4 indicate optical paths of the illumination light.

The imaging camera 21 and the optical element 22 are arranged inside the frame 26. As an example, the imaging camera 21 is configured from a CCD camera. As an example, the optical element 22 is configured from a total reflection mirror. The imaging camera 21 is horizontally attached to an upper plate portion of the frame 26. The imaging camera 21 images the edged lens 29 through the optical element 22. A reflecting surface of the optical element 22 is arranged with an inclination of 45 degrees with respect to an optical axis of the imaging camera 21. Further, an optical axis of the imaging unit 17 is set such that a center (boxing center) of the edged lens 29 passes through the optical axis of the imaging unit 17 when the edged lens 29 is supported in a reference posture supposed in advance. The reference posture described here refers to a posture of the lens when the center (boxing center) of the edged lens 29 accords with the center of the triangle having the positions of the three support pins 28 as the vertexes.

Note that the number of the optical elements that configure the optical system of the imaging unit 17 may be two or more. Further, the camera and the optical element may be integrally configured.

### <4. Configuration of Spectacle Lens>

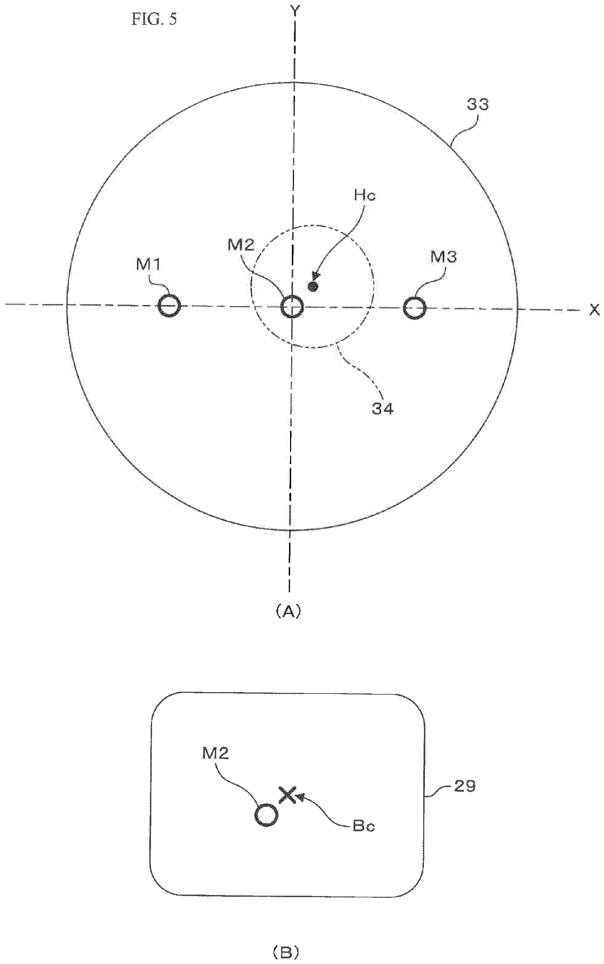

Fig. 5(A) is a front view illustrating a configuration of an uncut spectacle lens, and Fig. 5(B) is a front view illustrating a configuration of a spectacle lens after edging. An uncut lens 33 as an uncut spectacle lens has a circular outline. In the present embodiment, for easy understanding of the content of the invention, the spectacle lens is a single-vision lens. In that case, three mark points M1, M2, and M3 are affixed to the uncut lens 33 using the above-described lens meter 8. The three mark points M1 to M3 are affixed lining up behind each other on a cylinder axis (the X axis in Fig. 5(A)) identified by the prescription information of the spectacle wearer, in a case where the prescription information of the spectacle wearer has astigmatic prescription. The mark points M1 and M3 at both ends are affixed to positions separated at equal distances from the central mark point M2. The central mark point M2 is affixed to an optical center of the uncut lens 33. The optical center indicated by the mark point M2 corresponds to a fitting point in the single-vision lens.

In the present embodiment, the fitting point will be exemplarily described as a specific inspection item of the layout inspection of the spectacle lens. In this case, the mark point M2 indicating the position of the fitting point corresponds to the layout inspection mark. Typically, the mark points M1 to M3 are affixed to one lens surface (convex surface) of the spectacle lens. However, in implementing the present invention, the mark points may be affixed to the other lens surface of the spectacle lens.

The position (holder mounting center position) that serves as a center (reference) when the lens holder is mounted to the uncut lens 33 is determined based on an offset amount specified in accordance with a pupil center distance or the like included in the prescription information. The offset amount is specified with coordinate values (an X coordinate value and a Y coordinate value) in XY coordinates where the cylinder axis is an X axis and an axis perpendicular to the X axis at the optical center of the uncut lens 33 is a Y axis. When the offset amount is actually specified and the block device 9 is driven, the block device 9 identifies a position eccentric from the origin of the XY coordinates according to the offset amount as the holder mounting center position Hc. The block device 9 then mounts the lens holder 34 to the uncut lens 33 such that the holder mounting center position Hc becomes a processing center of edging. Accordingly, the edging machine 10 edges the uncut lens 33 according to the processing shape data where the holder mounting center position Hc is the processing center.

Meanwhile, the edged lens 29 that is a spectacle lens after edging is edged inaccordance with the frame shape of the spectacle frame (not illustrated). The intersection point with the mark "X" in Fig. 5 (B) indicates a boxing center Bc of a boxing system defined in the JISB7281 standard. This boxing center Bc corresponds to a frame center of the spectacle frame into which the edged lens 29 is fit. When the three mark points M1 to M3 of the edged lens 29 are removed by the edging, the three mark points M1 to M3 can be affixed again using the lens meter 8.

### <5. Method of Manufacturing Spectacle Lens>

Next, a method of manufacturing a spectacle lens according to an embodiment of the present invention will be described.

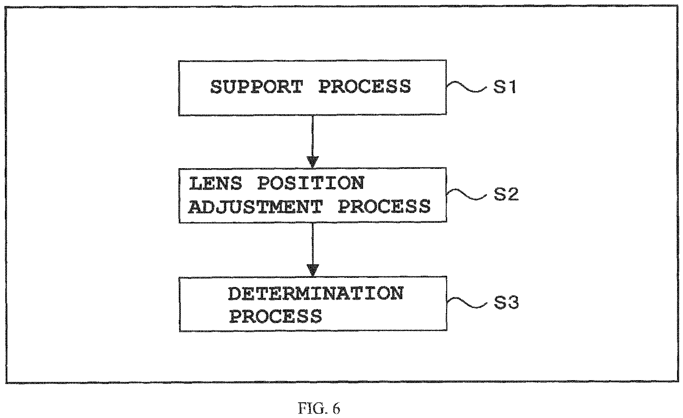

The method of manufacturing a spectacle lens according to an embodiment of the present invention includes a lens inspection process in which the layout inspection of the edged lens 29 edged in accordance with the shape of the spectacle frame is performed. In the lens inspection process, the layout inspection of the edged lens 29 (in the present embodiment, the layout inspection of the fitting point) is performed according to a procedure (processes) illustrated in Fig. 6. Hereinafter, description will be specifically given.

### (Support Process: S1)

First, the edged lens 29 is supported by the support unit 16. To be specific, the edged lens 29 is placed on the three support pins 28. At this time, the convex surface 29a of the edged lens 29 faces downward, and a concave surface 29b of the edged lens 29 faces upward. Accordingly, the three support pins 28 are in contact with the convex surface 29a of the edged lens 29, that is, the edged lens 29 is supported at three points. This process may be manually performed by the operator, or may be automatically performed using a lens supply device (not

### illustrated).

### (Lens Position Adjustment Process: S2)

Next, the position of the edged lens 29 is adjusted while the image on the monitor 18 is viewed. The position adjustment of the edged lens 29 is manually performed by the inspector. At that time, the display control unit 19 displays images as follows on the monitor 18.

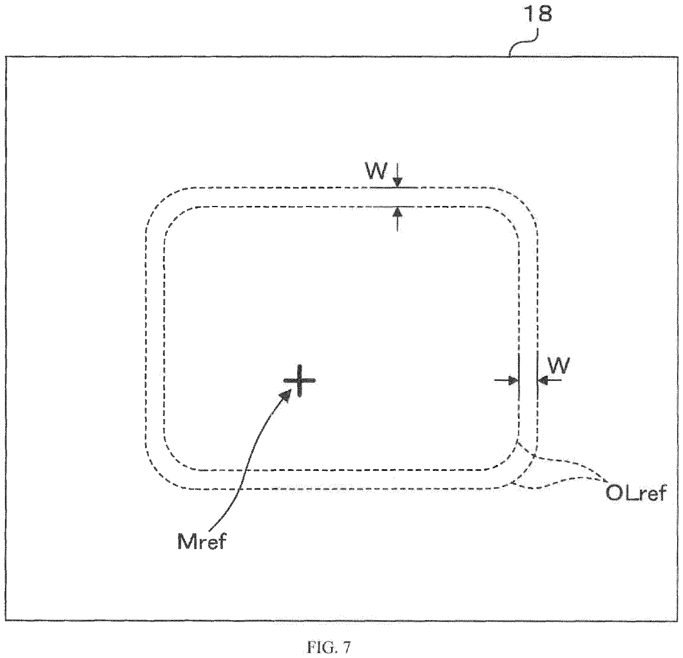

First, the display control unit 19 displays a lens outline reference line OLref and a layout reference mark Mref on a screen of the monitor 18, as illustrated in Fig. 7, before supplying the edged lens 29 to the support unit 16.

The lens outline reference line OLref indicates the position to which the visible outline of the edged lens 29 is positioned on the screen of the monitor 18. In the present embodiment, as an especially favorable form, the lens outline reference line OLref is displayed by double lines that define a positioning allowable width W of the visible outline of the edged lens 29. The layout reference mark Mref indicates the position where the mark point (layout inspection mark) M2 is arranged on the screen of the monitor 18. Timing to start the display of the lens outline reference line OLref and the layout reference mark Mref on the screen of the monitor 18 may be any time as long as it is before the start of the position adjustment of the edged lens 29.

The position where the lens outline reference line OLref is displayed and the position where the layout reference mark Mref is displayed on the screen of the monitor 18 are determined in the display control unit 19 as follows. First, in edging the uncut lens 33, the holder mounting center position Hc is identified based on the positions of the mark points M1 to M3 affixed to the uncut lens 33, and the processing shape data of the lens is obtained by calculation, assuming that this holder mounting center position Hc is the processing center. Therefore, the visible outline of the edged lens 29 to be displayed on the monitor 18 is determined by the processing shape data to be used for edging of the edged lens 29. Further, relative positional relationship between the visible outline of the edged lens 29 displayed on the monitor 18 and the mark point M2 is determined by the offset amount specified to identify the holder mounting center position Hc in the block device 9.

Therefore, the positions where the lens outline reference line OLref and the layout reference mark Mref are displayed can be identified based on the processing shape data and the offset amount in consideration of image magnification and the like of the imaging unit 17. To be specific, as for the display position of the lens outline reference line OLref, a lens visible outline is obtained from the processing shape data, and the display position can be identified with the double lines that include the lens visible outline in consideration of the positioning allowable width W. As for the display position of the layout reference mark Mref, the display position can be identified with a position eccentric from a center position of the lens visible outline obtained from the processing shape data by the offset amount.

The visible outline of the edged lens 29 described here refers to a line that indicates an outermost shape of the edged lens 29 in two-dimensional coordinates where the boxing center Bc is the origin when the edged lens 29 is viewed from the convex surface29aside. Thatis, in the present embodiment, the outline of the edged lens 29 having a three-dimensional structure with curves of the convex surface 29a and the concave surface 29b is captured with a two-dimensional visible outline. Therefore, in a case where a protruding V shape is formed on an edge surface of the edged lens 29, a contour line connecting the apex part of the V shape becomes the visible outline of the edged lens 29. Further, in a case where the edge surface of the edged lens 29 is plane or a case where a groove (depression) is formed in the edge surface, the contour line formed by the edge surface becomes the visible outline of the edged lens 29.

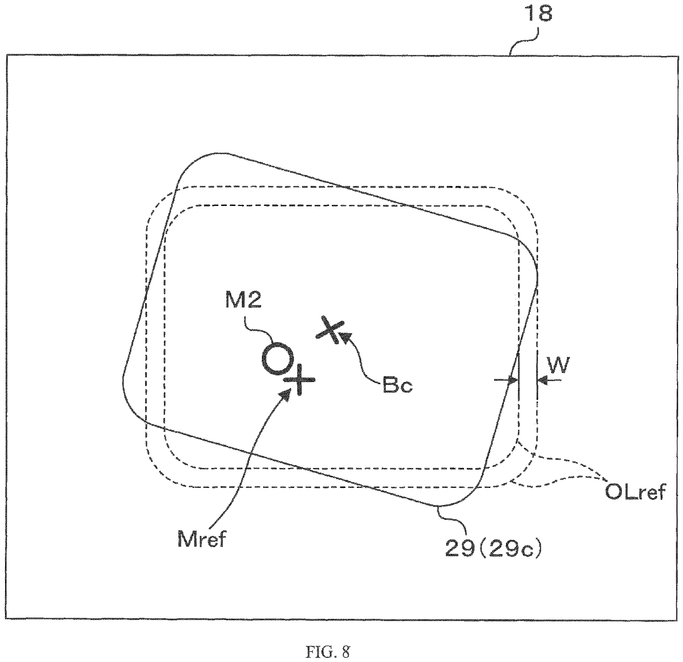

Further, the imaged image sent from the imaging unit 17 to the display control unit 19 when the edged lens 29 supported by the support unit 16 is imaged by the imaging camera 21 of the imaging unit 17 includes images of the visible line and the mark point M2 of the edged lens 29. Therefore, when the edged lens 29 is supplied to the support unit 16, the screen displayed on the monitor 18 by the display control unit 19 includes, as illustrated in Fig. 8, an image of the edged lens 29 and an image of the mark point M2, in addition to the lens outline reference line OLref and the layout reference mark Mref . Note that, before the position adjustment of the edged lens 29 is performed, the a visible outline 29c of the edged lens 29 is deviated from the lens outline reference line OLref, as illustrated in Fig. 8, for example.

In such a case, the inspector lightly touches an edge of the edged lens 29 supported by the support unit 16 to slightly shift the position (posture). Then, the positions of the images of the edged lens 29 and the mark point M2 displayed on the screen of the monitor 18 are changed according to movement of the edged lens 29. Therefore, the inspector adjusts (finely adjusts) the position of the edged lens 29 while viewing the screen on the monitor 18. Several ways of the position adj ustment of the edged lens 29 can be considered. Here, one of them will be exemplarily described.

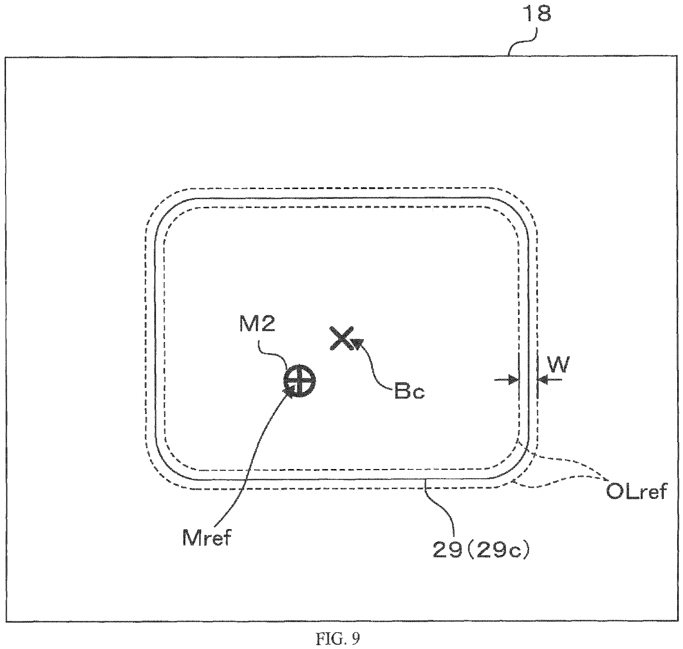

First, as illustrated in Fig. 8, in a case where the visible outline 29c of the edged lens 29 is deviated from the lens outline reference line OLref, the visible outline 29c of the edged lens 29 is positioned to the lens outline reference line OLref, as illustrated in Fig. 9. To be specific, the visible outline 29c of the edged lens 29 is positioned to fit in the positioning allowable width W of the lens outline reference line OLref displayed by the double lines. Accordingly, the edged lens 29 is supported in the reference posture in the support unit 16.

The image data displayed on the monitor 18 when the position of the edged lens 29 is adjusted is stored in the storage unit 20 in association with the identification information of the edged lens 2 9 at predetermined timing. Accordingly, the storage unit 20 stores the image data displayed on the monitor 18 as inspection data regarding the layout inspection. The timing to store the image data to the storage unit 20 is favorably, for example, timing after determination of quality described below is finished.

### (Determination Process: S3)

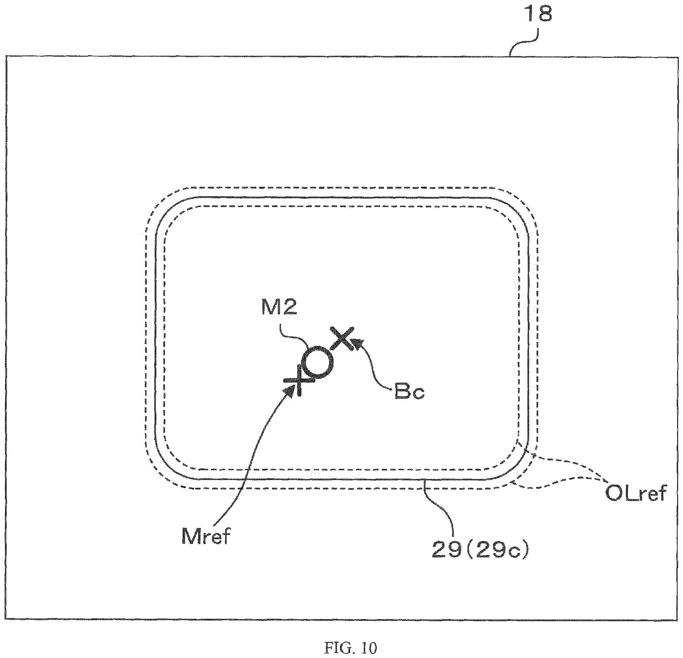

Next, the positional deviation of the mark point M2 with respect to the layout reference mark Mref is confirmed, and the quality of the layout inspection of the edged lens 29 is determined based on the confirmation result. This process is performed by the inspector while viewing the display screen on the monitor 18. To be specific, in a case where there is no positional deviationof themarkpoint M2 with respect to the layout reference mark Mref, as illustrated in Fig. 9, or in a case where the deviation amount falls within an allowable range determined in advance even if there is the positional deviation, as illustrated in Fig. 10, the edged lens 29 is determined to be the quality product. Further, when the positional deviation amount of the mark point M2 with respect to the layout reference mark Mref exceeds the allowable range, the edged lens 29 is determined to be the defective product.

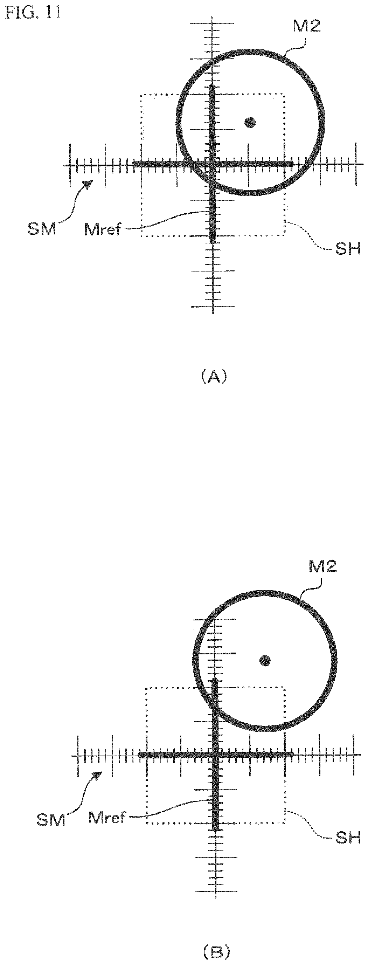

At that time, as illustrated in Figs. 11(A) and 11(B), a determination reference line (the square frame line in the example of Figs. 11 (A) and 11(B)) SH that indicates the allowable range of the positional deviationof the markpoint M2 with respect to the layout reference mark Mref may be displayed on or near the display position of the layout reference mark Mref. In this case, as illustrated in Fig. 11(A), the edged lens 29 is determined to be the quality product when the center (displayed by the black circle in Fig. 11(A)) of the mark point M2 exists inside the frame of the determination reference line SH. Further, as illustrated in Fig. 11(B), the edged lens 29 is determined to be the defective product when the center of the mark point M2 exists outside the frame of the determination reference line SH. Accordingly, the inspector can easily determine the quality. Further, a scale SM is displayed centered at the position of the layout reference mark Mref on or near the display position of the layout reference mark Mref, so that the positional deviation amount of the mark point M2 with respect to the layout reference mark Mref can be visually confirmed (measured) on the monitor 18.

### <6. Effects according to Present Embodiment>

According to the embodiment of the present invention, the imaged image obtained by imaging, by the imaging unit 17, the edged lens 29 supported by the support unit 16 is displayed on the monitor 18 together with the lens outline reference line OLref and the layout reference mark Mref, and the position adjustment of the edged lens 29 is performed while viewing the screen on the monitor 18, whereby the positional deviation of the mark point M2 with respect to the layout reference mark Mref can be confirmed. Accordingly, the layout inspection can be more accurately performed than a case of using an inspection chart paper. That is, in the case of using an inspection chart paper, variation is easily caused for the inspection result due to deviation of the viewpoint when the inspector sees the lens or the mark, and instability of the posture of the lens. In the present embodiment, the inspector can perform the layout inspection while viewing the display screen on the monitor 18, and thus the inspection result (determination of the quality) is not changed depending on the inspector. Therefore, highly accurate layout inspection can be realized. Further, objective inspection where variation of the inspection result due to the inspector is suppressed can be realized.

Further, the lens outline reference line OLref displayed on the monitor 18 may be a single line. However, it is favorable to display the lens outline reference line OLref by the double lines. Reasons for that are as follows.

First, when the lens outline reference line is expressed by a single line, the lines themselves are hard to see due to overlap of the lines when the visible outline of the edged lens is superimposed on the lens outline reference line on the screen on the monitor 18. Therefore, it is difficult to position the visible outline 29c to the lens outline reference line throughout the entire periphery of the edged lens 29. In contrast, in the case where the lens outline reference line OLref is expressed by the double lines like the present embodiment, the lines themselves cannot be hard to see due to overlap of the lines. Therefore, positioning of the edged lens 29 becomes easy. Further, the visible outline 29c of the edged lens 29 is fit within the positioning allowable width W of the lens outline reference line OLref, whereby variation in positioning due to individual inspectors becomes small.

Further, the embodiment of the present invention has employed the configuration to store the image data displayed on the monitor 18 when the position adjustment of the edged lens 29 is performed using the lens outline reference line OLref and the layout referencemarkMref in the storage unit 20. Therefore, after the edged lens 29 is shipped to the order side 2, the result of the layout inspection can be presented to the order side 2 with the images, as needed. Further, when a failure is caused such as a case where the fitting cannot be normally performed at the order side 2, the image data stored in the storage unit 20 can be effectively used as a reference to determine the cause.

### <7. Modifications and the like>

The technical scope of the present invention is not limited to the above-described embodiment, and includes forms to which various modifications and improvements are added within a scope where the specific effects obtained through the configuration elements of the invention and its combination can be derived.

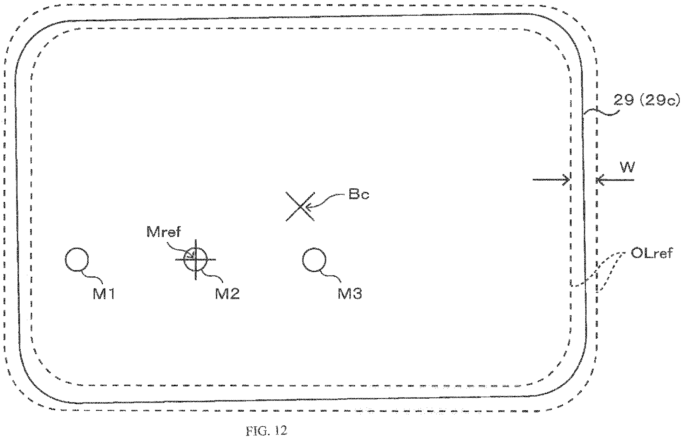

For example, the inspection item of the layout inspection is not limited to the positional deviation of the fitting point, and various items such as deviation of the monocular pupillary distance, axial deviation of the edged lens, and discovery of wrong specification of the processing shape are also included. Among these inspection items, as for the axial deviation of the edged lens, three mark points M1 to M3 are affixed to a cylinder axis of an edged lens 29 as layout inspectionmarks, as illustrated in Fig. 12. Then, on a monitor screen, the position of the edged lens 29 is adjusted using the three mark points M1 to M3 affixed to the edged lens 29, and in that state, quality determination of layout inspection regarding the axial deviation is performed according to whether a visible outline 29c of the edged lens 29 fits in an allowable width W of a lens outline reference line OLref. Further, the allowable range of the axial deviation differs depending on a prescription power, and thus the allowable width W of the lens outline reference line OLref displayed on the monitor screen may be changed according to the prescription power of the spectacle lens. To be specific, the allowable width W may be made wide when the prescription power is small, and the allowable width W may be made narrow when the prescription power is large.

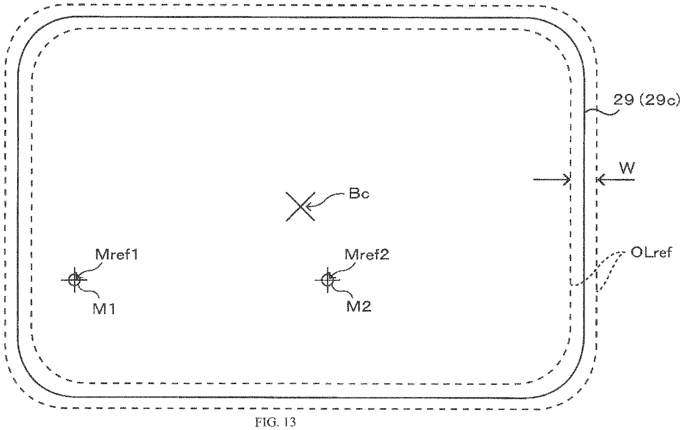

Further, the spectacle lens as an object to be inspected of the layout inspection is not limited to a single-vision lens, and for example, may be a progressive-power lens or a bifocal lens. Among the lenses, in a case of using the progressive-power lens as the object to be inspected of the layout inspection, hidden marks M1 and M2 are affixed on a horizontal reference line (not illustrated) of the edged lens 29 as layout inspection marks, as illustrated in Fig. 13, and layout reference marks Mref1 and Mref2 are displayed on the monitor screen corresponding to the hidden marks. Then, on the monitor screen, positional deviation between the hidden marks M1 and M2 affixed to the edged lens 29 and the layout reference markers Mref1 and Mref2 is confirmed in a state where a visible outline 29c of the edged lens 29 fits in the allowable widthWof the lens outline reference line OLref, and determination of quality may just be performed based on the result thereof.

The progressive-power lens covered by the present invention is a convex surface progressive-power lens (also referred to as external progressive) havingaprogressivesurface arranged at a side of the convex surface that is an object-side surface, a concave surfaceprogressive-power lens (also referred to as internal progressive) with a progressive surface arranged at a side of the concave surface that is an eyeball-side surface, or a both-surface progressive-power (also referred to as composite progressive) having progressive elements distributed and arranged on both surfaces (the convex surface and the concave surface).

Hereinafter, the concave surface progressive-power lens will be described using an example.

Two alignment reference marks (corresponding to the hidden marks M1 and M2) for identifying a design reference point (distance design reference point) defined in a JIS standard (JIST7330) are provided on the progressive-power lens that is one form of the spectacle lens. For example, the concave surface progressive-power lens is a progressive-power lens having a spherical convex surface and an aspherical concave surface (progressive surface). The alignment reference marks are formed at the concave surface side of the concave surface progressive-power lens. Further, the alignment reference marks are affixed to positions separated at equal distances from a prism measurement reference position in a horizontal direction (horizontal axis direction). Therefore, in the concave surface progressive-power lens, a middle point between the two alignment reference marks can be identified as the prism measurement reference position on a horizontal reference line that passes through the center of the two alignment reference marks.

In a case of affixing the alignment reference marks to the progressive-power lens, the marks are required to be "displayed by a not-easily erasable method" in the JIS standard (JIST7315). Further, the alignment reference marks often remain on the spectacle lens at a stage where the edging is completed, and are thus affixed by an indistinctive method in appearance (for example, a method of engraving the marks with a laser). Therefore, the alignment reference marks are called "hidden marks". Unlike the mark points that are erased by being wiped off, the alignment reference marks are marks that are basically not erased and remain. Note that the marks called hidden marks include other marks (that display a manufacturer name, a type, a power, and the like of the lens) affixed to the spectacle lens by a similar method, in addition to the alignment reference marks.

Further, in a case of using the bifocal lens as the object to be inspected of the layout inspection, mark points M1 and M2 are affixed to both ends of a segment top of an edged lens 29 as layout inspectionmarks, as illustratedinFig. 14. Further, a segment mark SGM forming an impression of a segment of the edged lens 29 is displayed on a monitor screenas a layout reference mark for confirmation of positional deviation. Then, on the monitor screen, positional deviation between the mark points M1 and M2 affixed to the edged lens 29 and the both ends of the segment top indicated by the segment mark SGM is confirmed in a state where a visible outline 29c of the edged lens 29 fits in an allowable width W of a lens outline reference line OLref, and determination of quality may just be performed based on the result thereof. Further, in a case of using the axial deviation of the edged lens describe above as an inspection item of the layout inspection, the axial deviation may just be inspected based on the hidden marks in a case where the edged lens to be inspected is the progressive-power lens, and the axial deviation may just be inspected based on the segment top in a case where the edged lens to be inspected is the bifocal lens.

Further, in the above embodiment, as the method of the position adjustment of the edged lens 29 using the lens outline reference line OLref and the layout reference mark Mref, positioning the visible outline 29c of the edged lens 29 to the lens outline reference line OLref has been exemplari ly described . However, the method is not limited thereto. For example, the position of the edged lens 2 9 may be adjusted such that the position of the edged lens 29 is shifted within a range where the visible outline 29c of the edged lens 29 fits in the positioning allowable width W of the lens outline reference line OLref, to cause the mark point M2 to get as close as possible to the layout reference mark Mref. In this case, positional deviation (for example, a positional deviation amount) of the mark point M2 with respect to the layout reference mark Mref is confirmed, and the quality of the layout inspection of the edged lens 29 is determined based on the confirmation result thereof. Further, other than the above example, the position of the edged lens 29 may be adjusted such that the position of the mark point M2 of the edged lens 29 is positioned to the layout reference mark Mref, and in the state, the visible outline 29c of the edged lens 29 is caused to get as close as possible to the lens outline reference line OLref. In this case, the positional deviation of the visible outline 29c of the edged lens 29 with respect to the lens outline reference line OLref (for example, whether the visible outline 29c fits in the positioning allowable width W) is confirmed, and the quality of the layout inspection of the edged lens 29 is determined based on the confirmation result thereof.

Further, in the above embodiment, the edged lens 29 is supported with the convex surface 29a facing downward, to which the mark points serving as the layout inspection marks are affixed, and the edged lens 29 is imaged from the convex surface 29a side. However, an embodiment is not limited to, and configurations as follows may be employed, for example:
(1) a configuration to support the edged lens 2 9 with the convex surface 29a facing downward, to which the mark points serving as the layout inspection marks are affixed, and to image the edged lens 29 from the concave surface 29b side;
(2) a configuration to affix mark points serving as the layout inspection marks to the concave surface 29b, to support the edged lens 29 with the convex surface 29a at the opposite side facing downward, and to image the edged lens 29 from the concave surface 29b side; and
(3) a configuration to affix the mark points serving as the layout inspection marks to the concave surface 29b, to support the edged lens 29 with the convex surface 29a at the opposite side facing downward, and to image the edged lens 29 from the convex surface 29a side.

Among the configurations, in a case where the edged lens is imaged from an opposite side to the lens surface where the mark points are affixed, like the configurations (1) and (3), it is favorable to consider an influence of refraction of the edged lens 29.

Note that, in the progressive-power lens, a layout mark that indicates a reference position for measuring a distance power, a layout mark that indicates a reference position for measuring a near power, a layout mark that indicates a distance eye point, and the like are written, in addition to the alignment reference marks, and these layout marks may be used as the " layout inspection marks". Further, in the concave surface progressive-power lens, the alignment reference marks exist at the concave surface side, and thus the layout marks maybe arranged on the concave surf ace. However, the layout marks may be arranged on the convex surface. In a case of arranging the layout marks on the concave surface, the configuration (2) above is favorable. In a case of arranging the layout marks on the convex surface, the configuration (1) above is favorable.

### Reference Signs List

- 1:: Communication edging system
- 11:: Lens inspection device
- 16:: Support unit
- 17:: Imaging unit
- 18:: Monitor
- 19:: Display control unit
- 20:: Storage unit
- 21:: Imaging camera
- 22:: Optical element
- 29:: Edged lens
- 33:: Uncut lens
- M1, M2, and M3:: Mark point
- Mref:: Layout reference mark
- OLref:: Lens outline reference line

## Claims

1. A lens inspection device used for layout inspection of an edged lens edged in accordance with a shape of a spectacle frame and having a layout inspection mark affixed on at least one of lens surfaces, the lens inspection device comprising:
a support unit configured to support the edged lens;
imaging means configured to take in an imaged image including a visible outline of the edged lens and the layout inspectionmarkby imaging the edged lens supported by the support unit;
a monitor configured to display the imaged image taken in in the imaging means; and
display control means configured to perform control to display, on the monitor, a lens outline reference line indicating a position to which the visible outline of the edged lens included in the imaged image is positioned, and a layout reference mark indicating a position where the layout inspection mark is arranged, together with the imaged image.

2. The lens inspection device according to claim 1, wherein
the display control means displays the lens outline reference line by double lines that define a positioning allowable width of the visible outline of the edged lens.

3. The lens inspection device according to claim 1 or 2, wherein
the display control means displays a determination reference line indicating an allowable range of positional deviationof the layout inspection mark with respect to the layout reference mark on or near a display position of the layout reference mark.

4. The lens inspection device according to any one of claims 1 to 3, wherein
the display control means displays a scale for visually confirming a positional deviation amount of the layout inspection mark with respect to the layout reference mark on or near a display position of the layout reference mark.

5. The lens inspection device according to any one of claims 1 to 4, comprising:
storage means configured to store image data displayed on the monitor when position adjustment of the edged lens is performed using the lens outline reference line and the layout reference mark, in association with identification information of the edged lens.

6. A method of manufacturing a spectacle lens including a lens inspection process for performing layout inspection of an edged lens edged in accordance with a shape of a spectacle frame, and having a layout inspection mark affixed to at least one of lens surfaces,
the lens inspection process comprising the processes of:
supporting the edged lens by the support unit;
imaging the edged lens supported by the support unit, and performing position adjustment of the edged lens while displaying, on a monitor, a lens outline reference line indicating a position to which a visible outline of the edged lens included in an imaged image obtained by the imaging is positioned, and a layout reference mark indicating a position where the layout inspection mark is arranged, together with the imaged image; and
determining quality of the layout inspection of the edged lens based on a result of the position adjustment of the edged lens.

7. The method of manufacturing a spectacle lens according to claim 6, wherein
an inspection item of the layout inspection is positional deviation of a fitting point.

8. The method of manufacturing a spectacle lens according to claim 6, wherein
an inspection item of the layout inspection is axial deviation of the edged lens.
